# EUROPEAN PATENT APPLICATION

(11) **EP 4 503 825 A1**
(43) Date of publication of application: **05.02.2025**
(21) Application number: 23188573.2
(22) Date of filing: 31.07.2023
(51) Int. Cl.: H04W 72/52, H04W 72/02, H04W 72/0453

(54) **ADAPTIVE MULTICHANNEL OPERATION**

(71) Applicant: Haltian Oy, 90230 Oulu (FI)
(72) Inventor: Pekki, Aleksandre, 90230 Oulu (FI)
(74) Representative: Kolster Oy Ab

(57) **Abstract**

An arrangement and a method for enabling multichannel operation are presented. The method comprises maintaining (300) a first list of channels available for transmission and reception, maintaining (302) a second list of channels the apparatus may use for transmission and reception, the second list comprising one or more channels of the first list, selecting (304) a channel from the second list for transmission and reception, and increasing or decreasing (306) the number of channels in the second list based on predetermined criterion.

## Description

### FIELD

Various embodiments relate to multichannel operation of wireless devices.

### BACKGROUND

When a multitude of wireless transceivers are located relatively close to each other and communicate with each other, the communication environment is challenging. This is especially true when the wireless transceivers are low power devices which should save power.

Typically, these devices are simple devices and designed to broadcast their transmissions on a channel. Each device can not necessarily communicate directly with every other device. Thus, each of these devices can only hear broadcasts of a certain part of the entire group. The spatial density of different parts of the group could vary significantly. The devices receiving transmissions may rebroadcast the transmission so that the transmitted content may reach the intended recipient.

In the case the local concentration of devices is high, the number of transmission errors on the channel used by the devices becomes so high that either the execution time of the operation increases significantly, and as a result, energy consumption increases, or operation of the devices is disrupted due to too many transmission errors.

### BRIEF DESCRIPTION

According to an aspect, there is provided subject matter of independent claims. Dependent claims define some embodiments.

One or more examples of implementations are set forth in more detail in the accompanying drawings and the description of embodiments.

### LIST OF DRAWINGS

Some embodiments will now be described with reference to the accompanying drawings, in which
Figure 1 illustrates an example environment in which embodiments of the invention may be applied,
Figure 2 illustrates an example of an apparatus,
Figures 3 and 4 are flowcharts illustrating embodiments,
Figures 5 and 6 illustrate examples of timeline diagrams showing examples of possible state transitions and channel switching's.

### DESCRIPTION OF EMBODIMENTS

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

Reference numbers, both in the description of the embodiments and in the claims, serve to illustrate the embodiments with reference to the drawings, without limiting it to these examples only.

The embodiments and features, if any, disclosed in the following description that do not fall under the scope of the independent claims are to be interpreted as examples useful for understanding various embodiments of the invention.

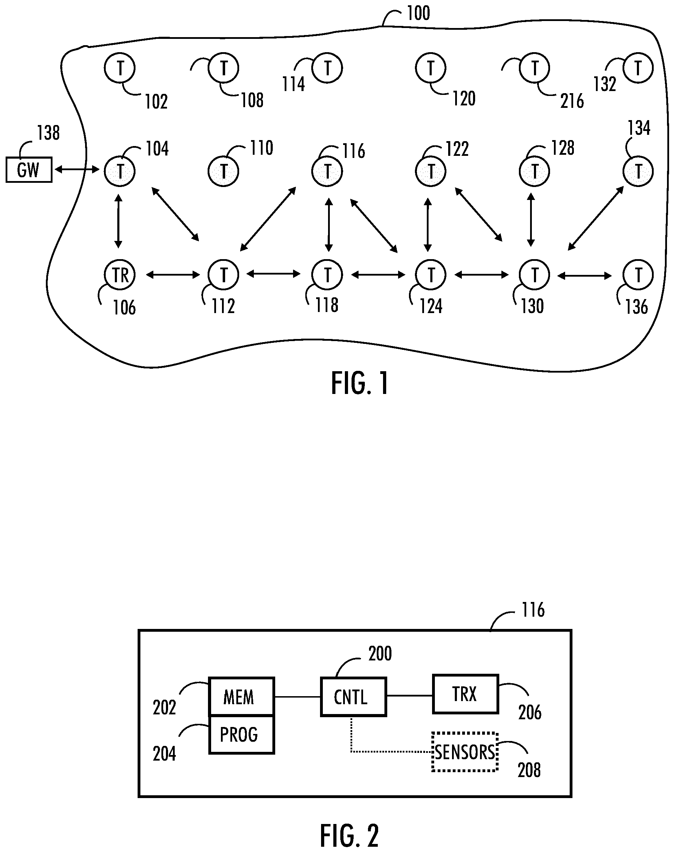

Figure 1 illustrates an example environment in which embodiments of the invention be applied. In the figure there is a group 100 of apparatuses or wireless devices 102 - 136 with capability of communicating with each other. The apparatuses communicate with each other utilising broadcast transmissions such that each apparatus of the group can not necessarily communicate directly with every other apparatus in that group. Each of these apparatuses can only hear broadcasts of a certain part of the entire group. The spatial density of different parts of the group could vary significantly. These apparatuses as a group may perform a certain operation according to the algorithm programmed in them. The apparatuses receive and send broadcast messages using a common communication channel (for example, one of the advertising channels of Bluetooth Low Energy). The number of these apparatuses may be high such as hundreds or thousands. There may be several groups of devices close to each other.

In an embodiment, the apparatuses may also communicate with the outside world via a gateway 138. The group may have selected a given apparatus 104 of the group that communicates with the gateway 138 and forwards messages intended to outside world to the gateway. The group may have several apparatuses communicating with the gateway, or any apparatus may communicate with the gateway, depending on the case.

In an embodiment, the apparatuses are small battery or solar powered devices such as tags.

There may be several groups of apparatuses close to each other.

In an embodiment, these apparatuses as a group are jointly performing a given operation or task according to the instructions programmed in them. The may apparatuses receive and transmit send broadcast messages using a common communication channel. An example of possible radio technology is Bluetooth Low Energy, BLE. The communication channel may be, for example, one of the advertising channels of BLE. What the given operation or task is, is not relevant regarding the embodiments of the invention.

Figure 2 illustrates an example of an apparatus or a wireless device 116. The apparatus of the example comprises a processing unit or a control circuitry 200 configured to control at least part of the operation of the apparatus.

The apparatus may comprise a memory 202 for storing data. Furthermore, the memory may store software 204 executable by the processing unit or control circuitry 200. The memory may be integrated in the processing unit.

The apparatus may comprise one or more interface circuitries 206. The interface circuitries are operationally connected to the processing unit or control circuitry 200. An interface circuitry may be a transceiver, or a set of transceivers configured to communicate wirelessly with other devices, such as other apparatuses or a gateway. The interface circuitry may be connected to an antenna arrangement (not shown). The apparatus may also comprise a connection to a transmitter instead of a transceiver.

The apparatus may also comprise other components such as sensors 208, for example.

In the case the local concentration of apparatuses is high, the number of transmission errors when the apparatuses communicate with each other, becomes so high that either the execution time of the operation increases significantly, and as a result, energy consumption increases, or the execution of the given operation is disrupted due to too many transmission errors.

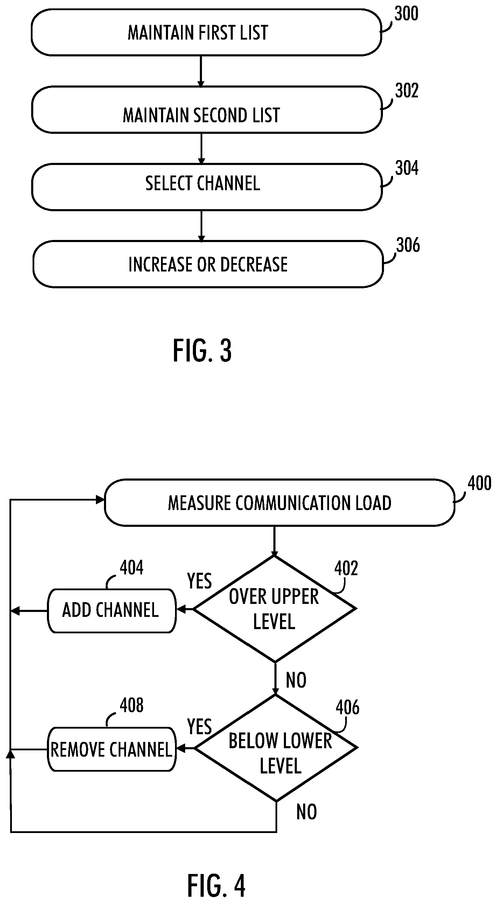

Figure 3 is a flowchart illustrating an embodiment of multichannel operation. In an embodiment, the method is executed by the apparatus of Figure 2.

In step 300, the apparatus is configured to maintain a first list of channels available for transmission and reception.

In step 302, the apparatus is configured maintain a second list of channels the apparatus may use for transmission and reception, the second list comprising one or more channels of the first list.

In step 304, the apparatus is configured select a channel from the second list for transmission and reception.

In step 306, the apparatus is configured increase or decrease the number of channels in the second list based on predetermined criterion.

In the system, there may be a set of channels, a first list, available for communication for the apparatuses of a group. Further, in an embodiment, each apparatus can select the channel to be used from a multitude of channels, a second list, which is a subset of the first list. The apparatus uses one channel at a time from the second list for communication. The apparatus may change the channel to be used at a time from the channels of the second list. Further, the apparatus may increase or decrease the number of channels in the second list based on given criteria. In an embodiment, the channel from the second list is selected randomly.

The channels in the first list of channels, i.e the list of all available channels of the system, may be in a given order from which an apparatus may add a channel to its list of used channels or removes a channel from the list.

In an embodiment, the first list of available channels and the order of the channels are common to all apparatuses of a group and are determined by the needs of the established system.

In an embodiment, the number of channels that an apparatus uses at any given time, i.e., the number of channels in the second list, depends on the overall communication load experienced by that apparatus. The communication load may be regularly measured by each apparatus based on the number of received broadcast messages, experienced noise level, the number of errors in message reception, the number of neighbouring apparatuses the apparatus is communicating with, and the average response time of the neighbours to messages sent by the apparatus, for example.

In an embodiment, the number of channels used by the apparatus is determined in such a way that, on the one hand, the number of transmission errors is acceptable, and on the other hand, there are always enough apparatuses on the channel to propagate information between apparatuses for the given operation to function properly at the current moment.

In an embodiment, to prevent apparatuses from forming closed groups on channels, each apparatus may randomly change its current channel within the second list at random intervals within certain limits. In an embodiment, the random interval comprises a default time interval and a random additional interval, which has a given maximum value. The apparatuses may store a blacklist of channels with high noise levels, and which channels are temporarily not used.

In an embodiment, the apparatuses are woken up together. The woke up may happen approximately at the same time, for example by a timer or a motion sensor. To perform the tasks assigned to an apparatus, it is configured to receive broadcast messages from some of its neighbours and make decisions based on these messages, including when and what messages to send. Each apparatus may start using either a predetermined number of channels or the number of channels that were used last time it was awake. In an embodiment, each apparatus may store history data of channel usage in the past and select the number of channels to be used based on the history data. In parallel with performing the task assigned to it, each apparatus may calculate the communication load experienced by the apparatus. It may be configured to maintain the current communication load within certain limits by adding or removing channels from its list of used channels. The upper and lower limits may be determined in simulations of the corresponding model of the system or from tests of the system itself.

Figure 4 is a flowchart illustrating the above embodiment. In an embodiment, the method is executed by the apparatus of Figure 2.

In step 400, the apparatus is configured to measure the communication load experienced by the apparatus.

In step 402, the apparatus is configured to compare the load to a given upper level threshold. If the communication load is greater than the upper level threshold, the apparatus adds 404 a channel to the channels it may use, i.e., increases the number of channels in the second list.

If the communication load was not greater than the upper level threshold, the apparatus is configured to, in step 406, compare the load to a given lower level threshold. If the communication load is smaller than the lower level threshold, the apparatus removes 408 a channel from the channels it may use, i.e., decreases the number of channels in the second list.

In an embodiment, the apparatus listens to broadcast messages, generates its own broadcast messages, and schedules them according to the task it has been assigned. The apparatus may be configured to execute a Channel Management module responsible for switching channels and adding or abandoning channels as needed to keep the communication load within predefined limits. In an embodiment, the next channel for listening or broadcasting is chosen randomly. The apparatus may be configured to remain on a channel it is using for a certain period of time plus a random interval. This way, each apparatus has an equal chance of encountering any of its neighbours on that channel.

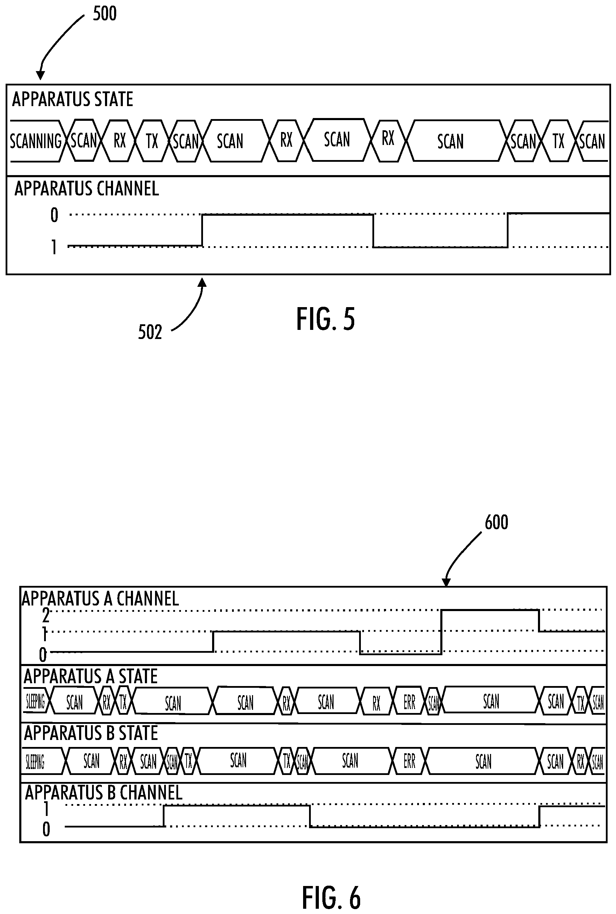

Figure 5 illustrates a timeline diagram showing an example of possible state transitions and channel switching of one apparatus.

The apparatus wakes up from the sleep mode and starts scanning (SCAN) 500 and receiving (RX) and transmitting (TX) broadcast messages according to the algorithm currently running on it. At first, the Device Channel Management uses Channel 0, but later 502 another channel is added to the list of channels in use because the communication load has exceeded the threshold value. The apparatus then switches from one channel to another in random order. The length of time interval on a channel is selected randomly within certain limits.

Figure 6 illustrates a timeline diagram showing an example of possible state transitions and channel switching of two apparatuses.

Suppose there is a large group of apparatuses. The apparatuses are awakened at about the same time in one way or another. The apparatuses are not synchronized with each other. The apparatuses act according to the same task assigned to them. The diagram shows a possible change of states and channels of two apparatuses of this group. Both devices start on two channels (use two channels alternately), channels '0' and '1', for example because the previous session of each ended using two channels.

At time 600, apparatus A decides to add another channel (channel 2) to its list of channels in use because the load (experienced by the number of errors and the number of messages received, for example) experienced by this apparatus has become too high. At about the same time, apparatus B ran out of time on the current channel. The Channel Management subsystem of the apparatus randomly selects channel 0 as the next channel.

Although the task itself the apparatuses are executing is irrelevant to the operation of the channel management subsystem, the task can supply input data to the subsystem to calculate the current communication load, such as the response time of neighbours to a broadcast message sent by the apparatus.

The proposed solution provides many advantages. The flexible use of multiple channels enabled by the embodiment allows for more efficient use of resources: time and battery life. This increases the reliability in the operation of the apparatuses. The load balancing on channels enabled by the embodiments avoids overloads, which in turn reduces the likelihood of failures and data loss in the communication between the apparatuses. In addition, the apparatuses can perform necessary operations and transition to sleep mode faster, which contributes to increased battery life and therefore improved energy efficiency.

The steps and related functions described in the above and attached figures are in no absolute chronological order, and some of the steps may be performed simultaneously or in an order differing from the given one. Other functions can also be executed between the steps or within the steps. Some of the steps can also be left out or replaced with a corresponding step.

The apparatuses or controllers able to perform the above-described steps may be implemented as an electronic digital computer, processing system or a circuitry which may comprise a working memory (random access memory, RAM), a central processing unit (CPU), and a system clock. The CPU may comprise a set of registers, an arithmetic logic unit, and a controller. The processing system, controller or the circuitry is controlled by a sequence of program instructions transferred to the CPU from the RAM. The controller may contain a number of microinstructions for basic operations. The implementation of micro-instructions may vary depending on the CPU design. The program instructions may be coded by a programming language, which may be a high-level programming language, such as C, Java, etc., or a low-level programming language, such as a machine language, or an assembler. The electronic digital computer may also have an operating system, which may provide system services to a computer program written with the program instructions.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

Even though the invention has been described with reference to one or more embodiments according to the accompanying drawings, it is clear that the invention is not restricted thereto but can be modified in several ways within the scope of the appended claims. All words and expressions should be interpreted broadly, and they are intended to illustrate, not to restrict, the embodiments. It will be obvious to a person skilled in the art that, as technology advances, the inventive concept can be implemented in various ways.

## Claims

1. An apparatus, comprising a transceiver,
at least one processor,
and at least one memory including computer program code,
the at least one memory storing instructions that, when executed by the at least one processor, cause the apparatus to:
maintain a first list of channels available for transmission and reception;
maintain a second list of channels the apparatus may use for transmission and reception, the second list comprising one or more channels of the first list;
select a channel from the second list for transmission and reception;
increase or decrease the number of channels in the second list based on predetermined criterion.

2. The apparatus of claim 1, wherein the instructions, when executed by the at least one processor cause the apparatus further to:
change the channel used for transmission and reception at random intervals to another channel of the second list.

3. The apparatus of any preceding claim, wherein the first list of channels comprises a given number of channels in a given order and the second list of channels comprises a given number of channels from the beginning of the first list.

4. The apparatus of any preceding claim, wherein the apparatus belongs to a group of apparatuses with capability of communicating with each other and maintaining a similar first list of channels, the apparatus transmitting and receiving signals with one or more apparatuses of the group.

5. The apparatus of any preceding claim, wherein the predetermined criterion is communication load experienced by the apparatus.

6. The apparatus of claim 4 and 5, wherein the instructions, when executed by the at least one processor, cause the apparatus further to:
measure at least one of the following:
number of messages received by the apparatus,
the number of errors in message reception of the apparatus,
experienced noise level,
number of apparatuses the apparatus is communicating with,
average response time messages the apparatus sent to the apparatuses,
and determine the communication load experienced by the apparatus based on monitoring.

7. The apparatus of claim 5, wherein the instructions, when executed by the at least one processor, cause the apparatus further to:
increase the number of channels in the second group if the communication load of the apparatus is greater than a given first limit.

8. The apparatus of claim 5, wherein the instructions, when executed by the at least one processor, cause the apparatus further to:
decrease the number of channels in the second group if the communication load of the apparatus is lower than a given second limit.

9. A method in an apparatus, comprising:
maintaining a first list of channels available for transmission and reception;
maintaining a second list of channels the apparatus may use for transmission and reception, the second list comprising one or more channels of the first list;
selecting a channel from the second list for transmission and reception;
increasing or decreasing the number of channels in the second list based on predetermined criterion.

10. The method of claim 9, further comprising:
changing the channel used for transmission and reception at random intervals to another channel of the second list.

11. The method of claim 9 or 10, wherein the first list of channels comprises a given number of channels in a given order and the second list of channels comprises a given number of channels from the beginning of the first list.

12. The method of any preceding claim 9 to 11, further comprising:
belonging to a group of apparatuses with capability of communicating with each other and maintaining a similar first list of channels;
transmitting and receiving signals with one or more apparatuses of the group.

13. The method of any preceding claim 9 to 12, wherein the predetermined criterion is communication load experienced by the apparatus.

14. The method of claim 12 and 13, further comprising:
measuring at least one of the following:
number of messages received by the apparatus,
the number of errors in message reception of the apparatus,
experienced noise level,
number of apparatuses the apparatus is communicating with,
average response time messages the apparatus sent to the apparatuses,
and determining the communication load experienced by the apparatus based on monitoring.

15. The method of claim 13, further comprising:
increasing the number of channels in the second group if the communication load of the apparatus is greater than a given first limit and
decreasing the number of channels in the second group if the communication load of the apparatus is lower than a given second limit.

16. A computer program comprising instructions for causing an apparatus to perform a method according to any preceding claim 9 to 15.
